# DEMANDE DE BREVET EUROPEEN

(11) **EP 0 641 595 A1**
(43) Date de publication de la demande: **08.03.1995**
(21) Numéro de dépôt: 93440073.0
(22) Date de dépôt: 08.09.1993
(51) Int. Cl.: B01F 15/00, F16D 1/08

(54) **Agitateur émaillé démontable pour réacteurs chimiques**

(71) Demandeur: DE DIETRICH & Cie, Société Anonyme dite, F-67110 Niederbronn-Les-Bains (FR)
(72) Inventeur: Fischbach, Albert, F-67340 Offwiller (FR)
(74) Mandataire: Metz, Paul

(57) **Abrégé**

L'agitateur démontable se compose d'un arbre d'entraînement (1) et d'un rotor d'agitation (2) dissociable à l'arrêt.

L'emmanchement entre l'extrémité (8) de l'arbre et le moyeu (6) du rotor (2) est du type conique à cône inversé.

L'association et la dissociation sont rendues possibles grâce à l'alternance de surfaces de dégagement arbre-moyeu (10,11 et 12) et (22,23 et 24) en retrait et plusieurs surfaces de portée mâles (13,14 et 15) en saillie sur l'arbre et de surfaces de portée femelles (19,20 et 21) en regard et d'évidements (22,23 et 24) sur le moyeu venant en contact de blocage l'une sur l'autre après les mouvements d'introduction, de rotation et de dépose lors de l'assemblage.

Une cale de sécurité (25) introduite dans l'un des évidements après assemblage assure une sécurité supplémentaire de blocage si nécessaire.

## Description

La présente invention se rapporte à un agitateur démontable pour réservoirs ou contenants fermés, notamment réacteurs chimiques du type fermé, c'est-à-dire à volume intérieur accessible par le seul trou d'homme.

Plus particulièrement, l'invention se rapporte à un assemblage avec blocage entre l'extrémité de l'arbre d'entraînement et le moyeu du rotor portant les pales de l'agitateur.

Les agitateurs classiques en une seule pièce sont limités dans leur utilisation aux seuls réacteurs réalisés en deux parties ou équipes d'une ouverture de montage.

La qualité première recherchée pour un réacteur chimique porte sur son étanchéité. Pour cette raison on préfère des réacteurs chimiques de type fermé c'est-à-dire ne présentant que le trou d'homme comme ouverture d'accès. Pour ces réacteurs seuls les agitateurs à pales démontables sont envisageables.

En effet, le trou d'homme offre un accès de section limitée ne permettant pas le passage de pièces encombrantes que sont les rotors monoblocs.

On utilise ainsi des agitateurs à pales démontables, c'est-à-dire dissociables de l'extrémité de l'arbre d'entraînement. L'assemblage du moyeu en bout d'arbre et le montage des pales sur le moyeu peuvent s'effectuer dans la cuve par un intervenant ayant pénétré à l'intérieur par le trou d'homme.

Le problème posé ne se limite pas à l'introduction de l'agitateur dans le volume intérieur du réacteur, mais provient également de la difficulté que l'on rencontre à revêtir entièrement de matière inerte par rapport au milieu réactif les pièces communément utilisées dans les assemblages mécaniques afin d'assurer leur protection contre l'agressivité chimique des liquides intérieurs à brasser.

Le meilleur revêtement connu à ce jour est incontestablement l'émail dont l'application est quasi impossible sur les arêtes vives et dont l'épaisseur de la couche ne peut être obtenue de façon absolument régulière. Celle-ci doit donc subir une rectification mécanique ultérieure pour atteindre la précison requise par les assemblages mécaniques.

Or, la rectification mécanique de certaines formes, notamment celles en contre-dépouille, les arêtes vives et les formes trop irrégulières, s'avère d'une extrême difficulté.

Pour toutes les raisons exposées ci-dessus, les surfaces de portée à variation brusque de forme ne peuvent convenir pour l'application visée.

Diverses solutions antérieures ont déjà été proposées afin de permettre l'introduction de l'agitateur en pièces détachés et son montage à l'intérieur de la cuve.

Trois solutions d'agitateurs à assembler sur place sont actuellement en application.

La première, décrite dans le brevet américain n° 4,221,488 au nom de SYBRON, consiste à pratiquer un rétrécissement à basse température de l'extrémité cylindrique rectifiée de l'arbre, puis à emmancher le moyeu sur cette extrémité. En revenant à la température ambiante le moyeu reste bloqué sur l'arbre.

La seconde solution est décrite dans le brevet européen n° 145 370 au nom de la société DE DIETRICH. Les trois pales de l'agitateur sont démontables séparément du bulbe d'extrémité de l'arbre d'entraînement. Ce bulbe présente trois sorties d'entraînement sous la forme de logements coniques horizontaux et radiaux dans lesquels les extrémités des pales sont emmanchées à force selon le degré d'inclinaison souhaité.

La troisième solution est exposée dans le brevet européen n° 393 516 au nom de la société TYCON Spa. L'entraînement s'effectue par un moyeu immobilisé sur un arbre d'entraînement par un emmanchement tronconique libre vers le bas et bloqué en rotation par une section elliptique.

Chacune de ces solutions présente des inconvénients spécifiques.

La première solution nécessite la mise en oeuvre de moyens cryogéniques jusqu'à l'intérieur du réacteur chimique. Le coût du montage ainsi que celui des interventions s'avèrent élevés. La durée des interventions liée à la mise en oeuvre des moyens constitue également un inconvénient.

La deuxième solution nécessite une extrémité inférieure de l'arbre mécaniquement complexe avec des surfaces coniques en retrait à rectifier avec précision pour garantir la tenue des pales sur le moyeu.

La troisième solution n'offre pas une garantie suffisamment importante de maintien de l'assemblage car elle présente toujours un risque de chute du mobile d'agitation par la dissociation de l'emmanchement. De plus, elle oblige à réaliser des formes élliptiques toujours difficiles à usiner et à rectifier.

La présente invention a pour but de remédier à ces difficultés et inconvénients et de proposer un agitateur démontable dont le rotor s'emmanche à l'extrémité de l'arbre d'une façon simple et rapide pour réaliser un assemblage indissociable en fonctionnement.

A cet effet, l'agitateur démontable selon l'invention pour réacteurs chimiques de type fermé comprenant un arbre d'entraînement à l'extrémité inférieure duquel est monté au moins un rotor à moyeu en cavité centrale portant au moins une pale est caractérisé en ce que le rotor est monté par son moyeu sur l'extrémité inférieure de l'arbre par un emmanchement conique à pointe dirigée vers le haut comprenant aussi bien pour la cavité du moyeu que pour l'extrémité de l'arbre une alternance de surfaces de portée et de surfaces de dégagement en retrait permettant un engagement arbre-moyeu dans une présentation angulaire donnée et un assemblage-blocage indissociable en fonctionnement après une course angulaire prédéterminée réalisant la mise en regard des surfaces de portée de l'arbre et du moyeu puis le contact-blocage consécutif à un mouvement vers le bas suivi d'un serrage extérieur.

L'assemblage selon l'invention apporte de nombreux avantages dont on citera ci-après les principaux. Il s'agit plus particulièrement des avantages suivants :
. montage et démontage mécaniques simples et rapides sans outillage spécial,
. blocage en rotation résultant d'un serrage extérieur et/ou de l'utilisation de surfaces de portée de formes appropriées,
. travaux de rectification plus aisés car effectués dans l'axe,
. sécurité totale du maintien vertical par un assemblage physiquement indissociable en fonctionnement,
. structures faciles à nettoyer,
. interchangeabilité rapide des rotors sur un même arbre,
. arbre scindable en deux tronçons réunis par le même type d'assemblage.

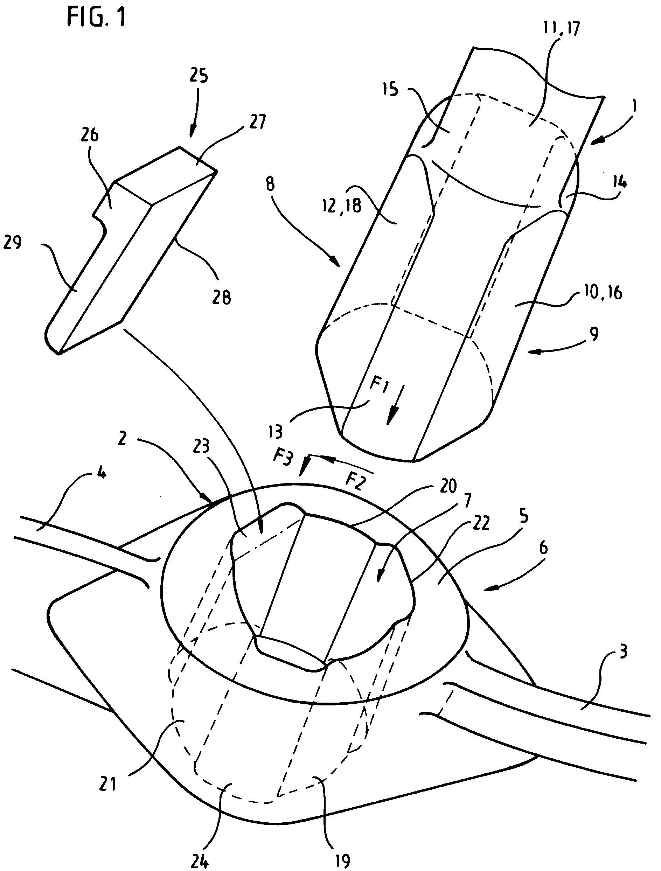

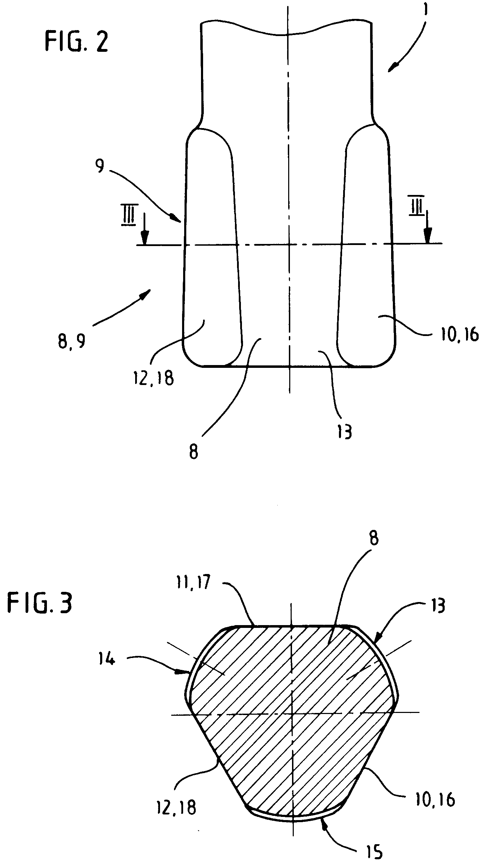

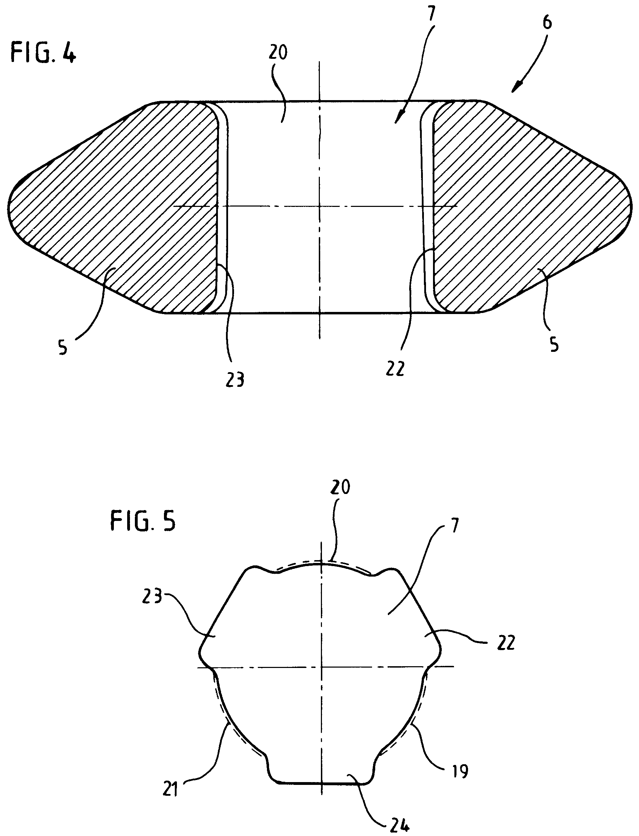

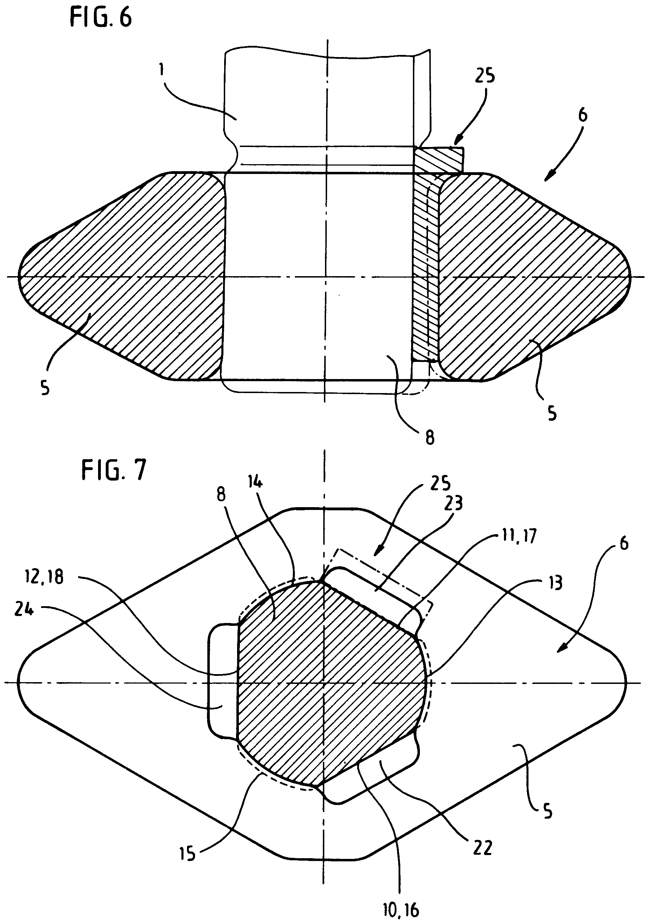

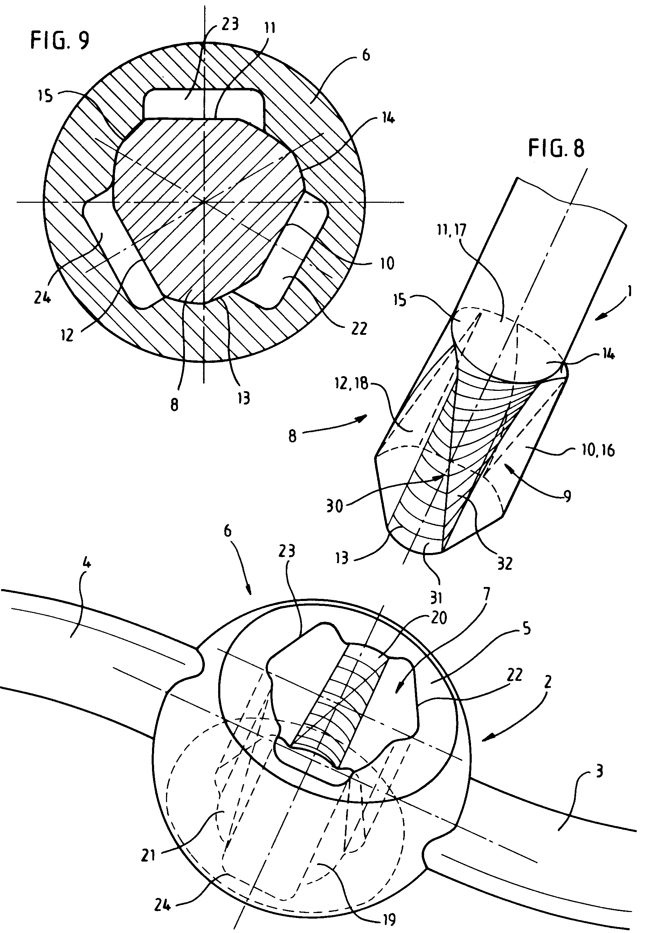

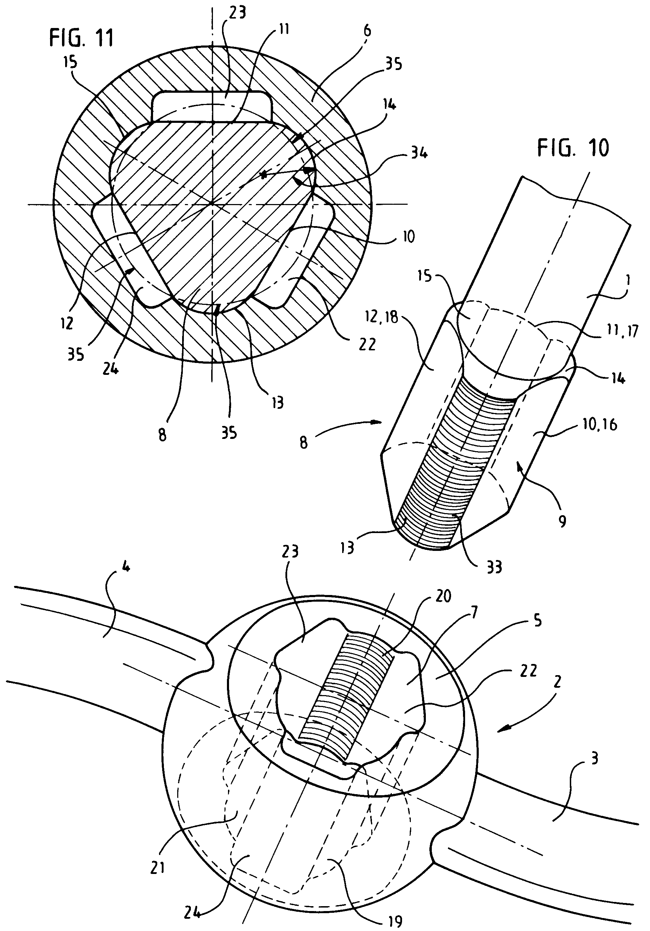

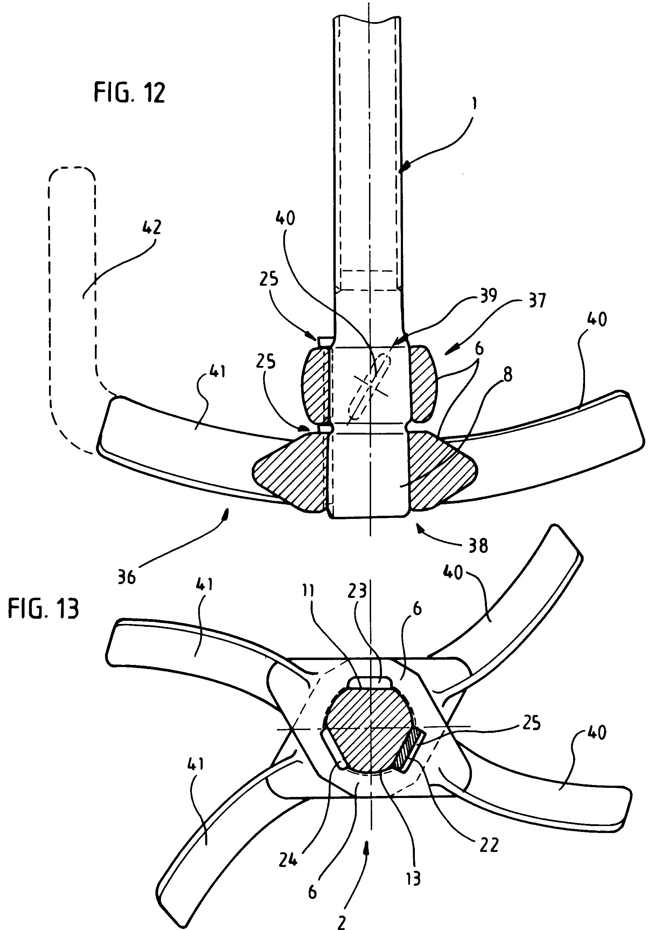

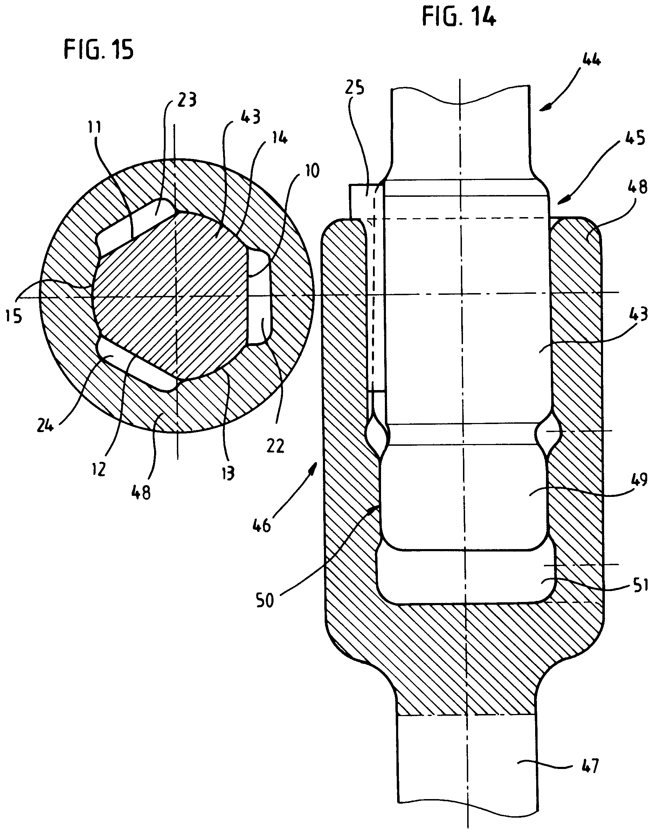

D'autres caractéristiques et avantages de l'invention apparaîtront dans la description qui suit, donnée à titre d'exemple et accompagnée des dessins dans lesquels :
. la figure 1 est une vue d'ensemble en perspective illustrant l'assemblage à l'état dissocié,
. la figure 2 est une vue en élévation de l'extrémité de l'arbre,
. la figure 3 est une vue en coupe transversale de l'extrémité de l'arbre selon la ligne III-III de la figure 2,
. la figure 4 est une vue en coupe à travers le moyeu,
. la figure 5 est une vue en plan représentant le contour de l'alésage conique du moyeu,
. la figure 6 est une vue en coupe représentant à travers le moyeu et la cale, l'extrémité de l'arbre engagée dans la cavité de celui-ci,
. la figure 7 est une vue en plan correspondant à la figure 6,
. la figure 8 est une vue d'ensemble en perspective illustrant une variante mettant en oeuvre des surfaces d'autoserrage,
. la figure 9 est une vue en coupe transversale de l'assemblage selon la figure 8,
. la figure 10 est une vue d'ensemble en perspective illustrant une variante mettant en oeuvre des surfaces d'autoblocage,
. la figure 11 est une vue en coupe transversale de l'assemblage selon la figure 10,
. la figure 12 est une vue en coupe longitudinale d'un arbre d'entraînement terminé par un rotor à deux étages,
. la figure 13 est une vue en coupe transversale et en plan d'un arbre d'entraînement à deux rotors situés près de l'extrémité inférieure,
. la figure 14 est une vue en coupe longitudinale illustrant l'assemblage de deux tronçons d'un même arbre par le même assemblage que celui du rotor,
. la figure 15 est une vue en coupe transversale de la figure 14.

L'idée générale inventive consiste à prévoir une liaison d'assemblage entre l'arbre et le moyeu du rotor qui est du type à emmanchement conique à cône inversé présentant sur les surfaces latérales opposées de l'emmanchement une alternance de surfaces de dégagement en retrait et de surfaces de portée pour permettre le libre passage vers le haut du moyeu suivi d'une rotation au cours de laquelle les surfaces de portée viennent en contact de recouvrement puis un emmanchement vers le bas avant un serrage mécanique extérieur pour réaliser l'immobilisation. Dans cette position le moyeu du rotor et l'extrémité de l'arbre font corps pour transmettre intégralement le couple de rotation.

On décrira ci-après l'invention plus en détail par au moins trois de ses variantes en référence aux figures.

En raison de l'application spécifique visée de façon non limitative dans le cadre de cette invention, toutes les pièces de l'agitateur sont recouvertes d'un revêtement inerte de protection à l'égard du milieu réactif chimique, notamment de l'émail.

L'agitateur se compose d'un arbre moteur 1 entraînant un ou plusieurs rotors tels que 2 pourvu chacun d'au moins une pale et par exemple dans la version représentée de deux pales 3 et 4.

Chaque rotor se présente sous la forme d'un bloc mécanique 5 dont la partie centrale forme un moyeu 6 selon une cavité 7 par laquelle il est monté sur l'arbre d'entraînement 1, par exemple à son extrémité inférieure 8. Le ou les autre(s) rotor(s) est ou sont placé(s) sur l'arbre 1 à des distances variables du premier en fonction de l'application demandée.

La figure 1 montre de façon particulièrement visible les formes techniques de l'assemblage selon la première variante.

L'extrémité inférieure 8 de l'arbre 1 est conformée par divers procédés connus selon une forme générale conique appelée mandrin 9 à cône inversé c'est-à-dire à sommet dirigé vers le haut. La pente conique est limitée à une valeur faible comprise entre 1 et 10%, par exemple 5%. Cette forme conique est partagée sur toute sa surface latérale en zones de retrait dites surfaces de dégagement mâles 10, 11 et 12 régulièrement réparties angulairement et en surfaces de portée mâles 13, 14 et 15 en saillie par rapport au corps de l'arbre, alternées avec les surfaces de dégagement. Selon la variante représentée sur la figure 1 les surfaces de dégagement et les surfaces de portée sont au nombre de trois qui correspond au nombre minimal adapté pour réaliser une liaison mécanique stable et sans vibration.

Bien entendu, le nombre exact de surfaces de portée dépendra de l'application.

Les surfaces de dégagement sont réalisées sous la forme de plans coupés en retrait ou méplats tels que 16, 17 et 18 à surface plane perpendiculaire à la bissectrice du secteur angulaire délimité c'est-à-dire parallèle à l'axe commun de l'ensemble.

L'ouverture angulaire de ce secteur peut varier en fonction de l'étendue souhaitée de ces plans de dégagement ou méplats et celle des surfaces de portée mâles 13, 14 et 15.

Ces dernières s'étendent longitudinalement entre les surfaces de dégagement en nombre identique à celles-ci.

Ces surfaces sont disposées régulièrement sur tout le pourtour de l'extrémité de l'arbre 1. L'écart angulaire entre celles-ci, dans l'exemple représenté, s'établit donc à 120° dans le cas de deux groupes de trois surfaces.

La cavité 7 du moyeu 6 affecte une conformation générale complémentaire à savoir un alésage conique s'adaptant sur la partie conique du mandrin de l'arbre d'entraînement 1.

Cette cavité comporte trois surfaces de portée femelles 19, 20 et 21 de forme conique complémentaire à celles des surfaces de portée mâles du mandrin disposées en correspondance angulaire avec elles.

Ces surfaces de portée sont séparées par des évidements longitudinaux 22, 23 et 24, par exemple à fond plat constituant autant d'espaces libres pour l'introduction des surfaces de portée mâles en saillie existant à l'extrémité de l'arbre d'entraînement. Ces évidements sont répartis angulairement de façon uniforme entre les surfaces de portée femelles. Il va de soi que la largeur des surfaces de portée est inférieure à celle des évidements pour permettre leur introduction dans le mandrin le long des évidements.

Le fond plat des évidements est soit parallèle à l'axe du moyeu soit incliné selon la pente du cône de l'emmanchement. La profondeur de ces évidements est telle qu'elle permet le passage libre des surfaces de portée mâles du mandrin lorsque celles-ci sont amenées en regard des évidements.

Le nombre ainsi que la forme réelle et exacte des surfaces de portée peuvent varier tout en restant dans l'esprit général inventif.

Ainsi, les figures 1 à 7 représentent des surfaces de portée complémentaires rigoureusement coniques qui présentent l'avantage de ne nécessiter que des travaux relativement simples et aisés de rectification de la couche d'émail en vue de l'ajustement mécanique de l'emmanchement conique.

Une cale de sécurité 25 permet de parfaire la sécurité de l'assemblage mécanique déjà assurée pour l'essentiel par un serrage mécanique extérieur. Celle-ci, par exemple du type à talon supérieur 26 présente un corps 27 de forme générale parallélépipédique venant s'engager à calage dans au moins un des évidements. Sa face avant 28 porte sur le fond de l'évidement correspondant alors que sa face arrière 29 est en contact de portée avec un des méplats du mandrin en vue de la sécurité supplémentaire. Le corps 27 de la cale présente à son extrémité supérieure un retour transversal constituant le talon supérieur 26 faisant office de butée longitudinale et de surface de prise lors de l'extraction de la cale.

Le montage de l'assemblage selon l'invention s'effectue simplement de la façon suivante.

Le moyeu 6 convenablement orienté c'est-à-dire évidements dirigés vers les surfaces de portée mâles est présenté en face du mandrin. On relève ensuite par un mouvement axial le moyeu dans le sens de la flèche F1 jusqu'à un niveau approprié suffisamment élevé pour que le mandrin pénètre dans le moyeu jusqu'à sa face opposée. On tourne ensuite le moyeu sur lui-même dans le plan horizontal, par exemple, dans le sens de la flèche F2, d'un trajet angulaire de 60° dans le cas représenté, pour que les surfaces de portée mâles et femelles arrivent en regard. On dépose ensuite le moyeu par un mouvement coaxial vers le bas. Le moyeu se bloque alors en rotation par le contact étroit de blocage des surfaces de portée l'une sur l'autre provenant de la force verticale représentée par le poids du rotor augmentée du serrage mécanique extérieur par une force axiale.

Si nécessaire, une ou plusieurs cale(s) de sécurité 25 sont ensuite insérées dans le ou les évidements du moyeu occupant l'espace du volume libre délimité par l'évidement correspondant obturé sur l'une de ses faces par un des méplats du mandrin. Pour des raisons mécaniques, il semble souhaitable de prévoir une cale pour chaque évidement.

Le blocage par contact des surfaces coniques avec cale(s) de sécurité peut avantageusement être remplacé par diverses formes complémentaires autoserrantes ou autobloquantes dans le cadre du même principe inventif dont deux exemples sont illustrés par les figures 8 à 11.

Par formes autoserrantes il faut comprendre des formes complémentaires de portée provoquant un contact de serrage dans le sens de rotation du rotor sous l'effet du couple moteur.

Par formes autobloquantes il faut comprendre des formes complémentaires bloquantes dans les deux sens après assemblage de l'extrémité inférieure de l'arbre avec le moyeu.

Les formes autoserrantes et autobloquantes des surfaces de portée de l'assemblage mandrin-moyeu également prévues sont représentées sur les figures de 8 à 11. Elles ne requièrent pas l'utilisation d'une cale.

Les formes autoserrantes dont un des exemples est représenté sur les figures 8 et 9 procurent un blocage par serrage dans le sens de rotation du rotor.

Selon cette forme de réalisation chaque surface de portée du mandrin affecte une forme tronconico-hélicoïdale c'est-à-dire celle d'une surface résultant de l'intersection d'une bande d'hélice à pas se développant vers le haut avec la surface conique précédemment définie.

Comme représenté sur la figure 8, ces surfaces de portée se distinguent par un changement de courbure du cône d'origine représentée par son intersection selon une ligne 30 avec une hélice partageant la surface de portée d'origine en deux parties dont une partie conique 31 et une partie hélicoïdale 32 située en retrait.

En réalisant cet équivalent de pas de vis, on rend l'assemblage autoserrant c'est-à-dire serrant automatiquement par la rotation de l'arbre.

Bien entendu, d'autres formes autoserrantes sont possibles. Elles entrent dans la cadre de la présente invention.

Les formes autobloquantes dont un exemple est représenté sur les figures 10 et 11 procurent un blocage dans les deux sens de rotation du rotor.

Selon cette forme de réalisation, chaque surface de portée, de forme générale restant conique, est conformée le long de sa partie médiane longitudinale et sur toute sa hauteur selon une forme saillante ou en retrait 33 c'est-à-dire à rayon de courbure 34 différent de celui du cône d'origine 35 ou toute autre forme équivalente venant se bloquer dans une forme complémentaire correspondante que présente la surface de portée en regard du moyeu.

Bien entendu, ces formes saillantes ou en retrait peuvent être elles-mêmes coniques.

Ce type de forme permet un blocage dans les deux sens de rotation. Le blocage du moyeu s'effectue par simple mouvement axial vers le bas sans aucune rotation.

Il est évident que ces formes saillantes ou en retrait sont compatibles avec la profondeur des évidements.

D'autres formes autobloquantes sont possibles Elles entrent dans le cadre de la présente invention.

Bien entendu, l'invention ne se limite pas à un seul rotor en bout d'arbre d'entraînement. L'invention couvre également des extrémités d'arbre à double rotor 36 et 37 ou à rotor(s) supplémentaire(s) disposé(s) à des emplacement(s) différent(s) comme par exemple la réalisation représentée sur les figures 12 et 13. Selon celle-ci, l'extrémité de l'arbre comporte deux zones successives d'assemblage 38 et 39, superposées et conformées chacune en un mandrin de forme générale conique avec les groupes de méplats et de surfaces de portée telles que celles décrites ci-dessus ou l'une de leur variante.

Ces zones d'assemblage ou zones de mandrin sont appelées à recevoir chacune un rotor dont le moyeu présente des formes complémentaires. Bien entendu, pour des raisons de facilité d'usinage en ligne, on réalisera les méplats successifs selon une suite longitudinale.

Pour des raisons évidentes d'efficacité, on montera des rotors bipales 40 et 41 décalés angulairement le plus proche possible de 90° ou des rotors différents par exemple à pales du type ancre 42 représentée en traits interrompus sur la figure 12.

Comme le montrent les figures 14 et 15, l'invention s'étend également à la confection d'assemblage(s) entre deux ou plusieurs tronçons d'arbre dont pourrait être constitué l'arbre d'entraînement.

L'extrémité inférieure 43 du tronçon supérieur 44 est conformée selon un mandrin 45 reprenant les formes techniques du mandrin de bout d'arbre et l'extrémité supérieure 46 du tronçon inférieur 47 présente les formes complémentaires qui sont celles d'un moyeu 49.

Pour améliorer la stabilité d'alignement et la transmission du mouvement, le mandrin présente une prolongation centrale cylindrique 49 vers le bas qui vient s'emmancher dans un logement cylindrique 50 en regard prévu en fond de cavité 51 du moyeu 48 selon laquelle est conformée l'extrémité supérieure du bout d'arbre inférieur.

La présente invention n'est pas limitée à des caractéristiques de forme des surfaces de portée. On peut ainsi envisager des surfaces de portée à faible coubure ou concavité. De même, une variante intéressante met en oeuvre des surfaces de portée planes et inclinées vers l'axe longitudinal de bas en haut.

Il est bien entendu qu'au-delà des moyens décrits, diverses modifications évidentes et variantes simples entrent dans le cadre de la présente invention.

## Revendications

1. Agitateur démontable à pièces recouvertes d'un revêtement inerte de protection par rapport au milieu réactif pour réservoirs ou contenants notamment pour réacteurs chimiques comprenant un arbre d'entraînement (1) à l'extrémité inférieure (8) duquel est monté démontable à l'arrêt au moins un rotor d'agitation (2) à moyeu (6) en cavité centrale (7) caractérisé en ce que chaque rotor (2) est monté par la cavité (7) de son moyeu (6) sur l'extrémité inférieure (8) ou mandrin (9) de l'arbre d'entraînement (1) par un emmanchement conique inversé c'est-à-dire à pointe dirigée vers le haut comprenant aussi bien pour la surface latérale extérieure mâle de l'arbre (1) que pour la surface intérieure femelle de la cavité (7) du moyeu (6) une alternance de surfaces de portée respectivement mâles ( 13, 14 et 15 ) ou femelles ( 19, 20, 21 ) et de surfaces de dégagement de mandrin ( 10, 11 et 12 ) ou de moyeu ( 22, 23 et 24 ) conformées respectivement dans chaque surface latérale mâle ou femelle, lesdites surfaces de dégagement formant un retrait pour permettre le libre passage vers le haut puis l'engagement arbre-moyeu dans une présentation angulaire donnée et un assemblage-blocage indissociable en fonctionnement après une course angulaire prédéterminée réalisant la mise en regard des surfaces de portée de l'arbre (1) et du moyeu (6) puis le contact-blocage de ces surfaces consécutif à un mouvement vers le bas suivi d'un serrage extérieur par une force axiale.

2. Agitateur selon la revendication 1 caractérisé en ce que les surfaces de dégagement mâles ( 10, 11 et 12 ) sur l'arbre (1) sont des méplats ( 16, 17 et 18 ) parallèles à l'axe de l'arbre, angulairement régulièrement répartis et les surfaces de dégagement femelles sont des évidements longitudinaux ( 22, 23 et 24 ) conformées dans la surface latérale intérieure de la cavité du moyeu angulairement régulièrement répartis de la même façon que les méplats.

3. Agitateur selon les revendications 1 et 2 caractérisé en ce que les surfaces de portée mâles et femelles en regard sont coniques.

4. Agitateur selon la revendication 3 caractérisé en ce qu'une cale de sécurité (25) de la forme de l'évidement et à talon supérieur (26) est engagée dans l'évidement après assemblage arbre-moyeu.

5. Agitateur selon les revendications 1 et 2 caractérisés en ce que les surfaces de portée mâles et femelles en regard sont autoserrantes.

6. Agitateur selon la revendication 5 caractérisé en ce que les surfaces de portée mâles et femelles en regard sont tronconico-hélicoïdales.

7. Agitateur selon les revendications 1 et 2 caractérisé en ce que les surfaces de portée mâles et femelles en regard sont autobloquantes.

8. Agitateur selon la revendication 7 caractérisé en ce que les surfaces de portée mâles sont conformées selon une surface saillante le long de leur partie médiane par rapport au cône d'origine.

9. Agitateur selon la revendication 7 caractérisé en ce que les surfaces de portée mâles sont conformées selon une surface en retrait le long de leur partie médiane par rapport au cône d'origine.

10. Agitateur selon l'une quelconque des revendications de 1 et 2 caractérisé en ce que les surfaces de portée sont planes et inclinées vers l'axe longitudinal du bas vers le haut.

11. Agitateur selon l'une quelconque des revendications précédentes caractérisé en ce que aussi bien les surfaces de portée que les surfaces de dégagement sont au nombre de trois.

12. Agitateur selon l'une quelconque des revendications précédentes caractérisé en ce que l'arbre comporte plusieurs zones de mandrin.

13. Agitateur selon l'une des revendications précédentes caractérisé en ce que l'arbre d'entraînement (1) est réalisé en au moins deux tronçons l'un supérieur (44) et l'autre inférieur (47) et en ce que les tronçons présentent à leurs extrémités en regard (43) et (46) une zone de mandrin (45) pour le tronçon supérieur (44) et une zone du moyeu (48) pour le tronçon inférieur (47), ces zones étant de conformation identique à celles revendiquées ci-dessus pour réaliser un assemblage du même type.

14. Agitateur selon la revendication 13 caractérisé en ce que le mandrin (45) présente une prolongation centrale cylindrique (49) venant s'emmancher dans un logement cylindrique (50) en regard prévu en fond de cavité (51) du moyeu (48) existant à l'extrémité supérieure (46) du tronçon d'arbre inférieur (47).
